# EUROPEAN PATENT SPECIFICATION

(11) **EP 3 285 603 B1**
(45) Date of publication and mention of the grant of the patent: **17.04.2024**
(21) Application number: 16782393.9
(22) Date of filing: 22.04.2016
(51) Int. Cl.: A23N 7/02, A47J 17/14, A47J 17/18

(54) **POTATO PEELER**
KARTOFFELSCHÄLER
ÉPLUCHEUR DE POMMES DE TERRE

(30) Priority: 23.04.2015 AU 2015901460
(43) Date of publication of application: 28.02.2018
(73) Proprietor: Breville Pty Limited, Alexandria, NSW 2015 (AU)
(72) Inventor: THOMAS, Mark, Leichhardt, New South Wales 2040 (AU); ANTKOWIAK, Margaret, Bronte, New South Wales 2024 (AU); BARNARD, Pierce, James, Cherrybrook, New South Wales 2126 (AU); MCCLEAN, Stephen, John, Camden South, New South Wales 2570 (AU)
(74) Representative: Zimmermann, Tankred Klaus
(86) International application number: PCT/AU2016/000143
(87) International publication number: WO 2016/168889

(56) References cited:
- EP-A1- 0 075 500
- CA-A- 1 107 170
- CA-A- 1 107 170
- CH-A- 356 243
- DE-B- 1 136 071
- DE-C- 202 195
- FR-A- 1 181 902
- GB-A- 917 504
- GB-A- 954 661
- US-A- 2 613 712
- US-A- 2 697 464
- eSpares: "How to use a potato peeler attachment- Kenwood", , 8 October 2012 (2012-10-08), page 1, XP054976944, Retrieved from the Internet: URL:https://www.youtube.com/watch?v=sQr5CV OGgHQ [retrieved on 2016-11-28]
- 'Kenwood Potato Peeler', [Online] 08 October 2012, XP054976944 Retrieved from the Internet: <URL:https://www.youtube.com/watch?v-sQr5CV OGgHQ> [retrieved on 2016-07-13]

## Description

### Field of the Invention

The technology relates to motorised potato peelers and more particularly to a potato peeler accessory for a food processor.

### Background of the Invention

Motorised potato peelers are well known in commercial and industrial settings. The present technology seeks to bring the speed and convenience of motorised potato peelers to domestic kitchens by providing an accessory that can be used with a food processor or other food processing devices.

CA 1 107 170 A discloses a food processor having a vegetable peeler unit comprising a power unit including a drive shaft rotatable in one direction, a container removably mounted on the power unit, a driven shaft having one end adapted to engage the drive shaft when in use, and a concave peeler disc rigidly mounted on the other end of the driven shaft for rotation together therewith. The concave peeler disc is inclined a predetermined angle relative to the longitudinal axis of the driven shaft so that, during the rotation of the drive shaft, the peeling disc can undergo a wobbling motion while simultaneously rotating about the drive shaft. The peeler disc has a plurality of scraping openings defined therein, which openings scuff or scrape a thin surface layer of a vegetable, for example, a potato, during the rotation thereof. In this way, very efficient peeling of the vegetable can be obtained.

GB 917 504 A relates particularly to such machines of the kind comprising a cylindrical container with abrasive lining, a rotatable table with abrasive face to support the potatoes being peeled, and means by which said table can be rotated so that the potatoes supported thereon are forced against the abrasive lining by centrifugal action while they are carried round by the table, the abrasive action of the lining and table peeling the potatoes. Water is delivered to the container and the peelings are carried by the water to a peeling trap or interceptor. The potato peeling machine is intended for hotels, boarding-houses, restaurants and the like.

### Objects and Summary

It is an object of the present invention to provide a potato peeling accessory device allowing for an efficient peeling of potatoes and removal of waste.

This object is achieved by a potato peeling accessory device according to claim 1.

### Brief Description of the Drawing Figures

In order that the invention be better understood, reference is now made to the following drawing figures in which:
Figure 1 is a perspective view of a potato peeling accessory and food processor bowl.
Figure 2 is a cross sectional view of a device depicted in Figure 1.
Figure 2a is a cross sectional view of a food processor incorporating a potato peeling accessory in accordance with the teachings of the present technology.
Figure 3 are cross sectional views of potatoes being peeled by a device in accordance with the present technology.
Figure 4 is a cross sectional view of a potato peeling accessory used in conjunction with a top driven spindle and gearbox.
Figure 5 is a perspective view of a working surface of a potato peeling accessory.
Figure 6 is a top plan view of a potato peeling accessory having eight peeling ribs.
Figure 7 is a top plan view of a potato peeling accessory having four peeling ribs.
Figure 8 is a perspective view of a potato peeling accessory.
Figure 9 is a perspective view of a potato peeling accessory.
Figure 9a is a cross-sectional view of a potato peeling accessory.
Figure 10 is a perspective view of a potato peeling accessory.
Figure 11 is a perspective view of a potato peeling accessory.
Figure 12 is a top plan view of a potato peeling accessory used in conjunction with a static cylinder having abrasion features.
Figure 13 is a cross sectional view of the device depicted in Figure 12.
Figure 14 is a exploded perspective view of the device shown in Figures 12 and 13.
Figure 15 is a perspective view of a potato peeling accessory having ribs curved in one plane.
Figure 16 is a side elevation of the accessory shown in Figure 15.
Figure 17 is a perspective view of a potato peeling accessory having a truncated conical upper surface and straight, flat ribs.
Figure 18 is a side elevation of the accessory shown in Figure 17.
Figure 19 is a perspective view of a potato peeling accessory having a flat upper surface, illustrated with two different styles of rib.
Figure 20 is a side elevation of the accessory shown in Figure 19.

### Best Mode and Other Embodiments of the Technology

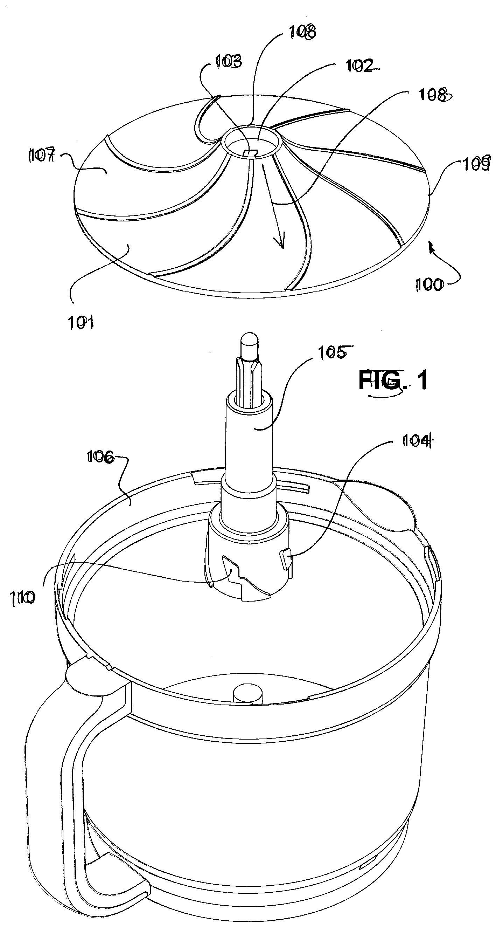

As shown in Figure 1, a potato peeling accessory 100 comprises a circular "monolithic" or unitary body with no moving parts 101 into or through which is formed a central bore or socket or coupling or opening 102. All forms of the body are preferably removable from an appliance so the body can be cleaned. All features of the body that allow it to be driven, such as the socket, bore or opening are referred to herein as a coupling. The coupling is formed around or in the centre of the body, generally about the longitudinal or vertical axis of rotation. An interior surface of the opening or coupling 102 has mechanical features 103 that are adapted to engage and be driven by cooperating features 104 on a drive spindle 105 or drive hub. The drive spindle 105 in this example has its own coupling and is adopted for use in a bowl 106 of a food processor. It will be appreciated that the body 100 and the spindle 105 may be formed together, detachable from one another, interconnected with an adapter or interlocked with each other in a number of different ways. In the example of Figure 1, the spindle 105 is driven (directly or indirectly) by a motor located in the base of the food processor. It will be appreciated that there are many ways of coupling the accessory to the motor that drives it.

In the example of Figure 1, the upper surface 107 of the accessory 100 is radially curved, that is, smoothly curved in the radial direction 108. The vertically highest point of the accessory 108 occurs at or close to the central opening 102. The lowest point of the accessory 109 is located adjacent to or at the outer, preferably circular rim of the accessory 100. The curvature of the upper surface 107 may be flatter toward the rim 109 than near the opening 102.

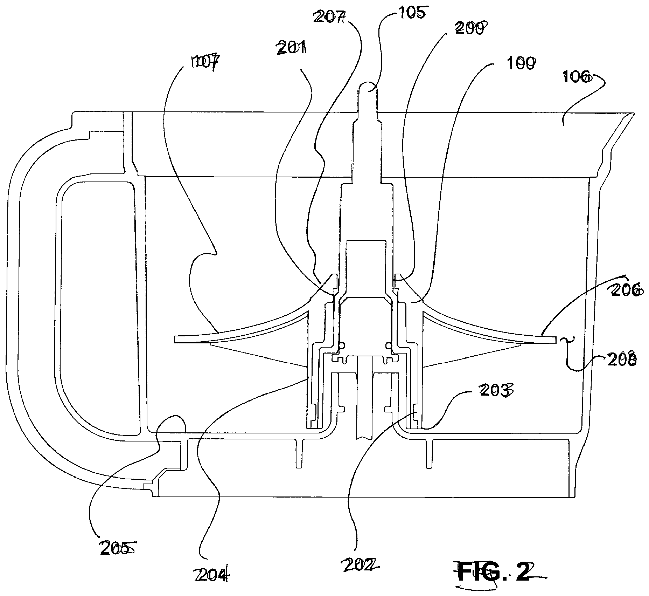

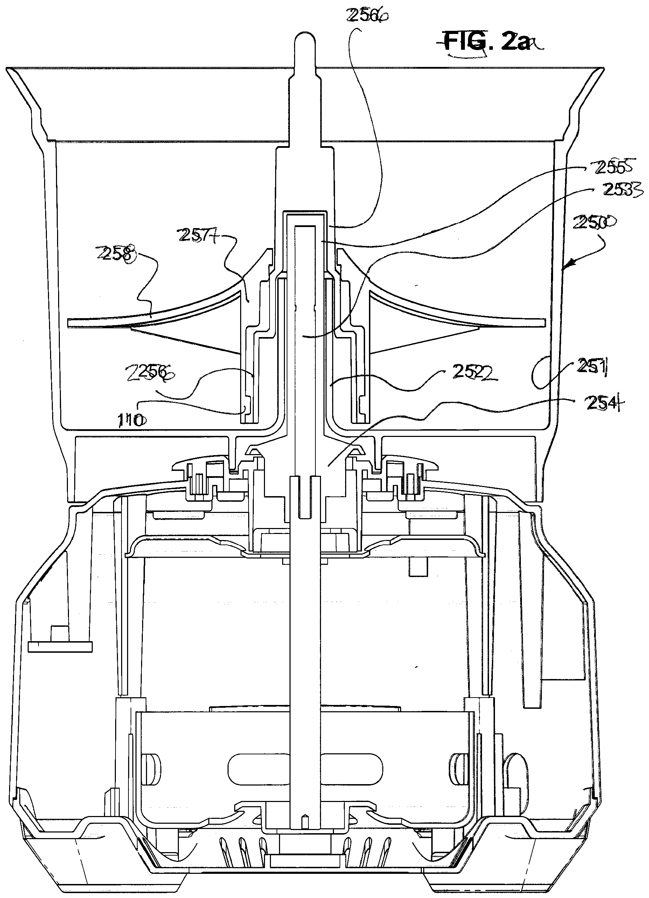

As shown in Figure 2, the inner bore of the central opening or coupling 200 may have one or more internal steps or protruding or other coupling features 201 so as to accommodate the spindle 105 or a suitable spindle adapter. In this example, the male protrusions 202 that engage with the spindle or adapter features no are located toward the lower edge 203 of the accessory 100. The lower body of the accessory 100 further comprises a central cylindrical sleeve portion 204 through which passes the central opening and that elevates the upper surface 107 of the accessory above the floor 205 of the food processor's bowl 106. The sleeve 204 extends beyond the rim 206 so as to elevate the rim above the floor 205. The elevation of the rim 206 above the floor 205 must be large enough to accommodate a reasonable amount of peelings. The gap 208 between the outer rim 206 and the bowl's sidewall must be small enough that a potato does not fall through but peelings do. As seen in the side view, the area immediately or closely adjacent to the outer rim 206 of the accessory is relatively horizontal or flat whereas the inner margin of the accessory 207 is inclined with respect to the horizontal. In preferred embodiments, the curvature between the inner and outer margins of the upper surface of the accessory are continuously and smoothly curved. However, the curvature can be so slight toward the outer margin 206 that the accessory appears horizontal or flat in this region. In other embodiments, the outer margin 206 is actually horizontal or flat.

As shown in Figure 2a, some food processing appliances 250 utilise a bowl 251 having an elongated central neck 252 through which passes the bowl's drive shaft 253. The drive shaft 253 extends from the bowl's coupling 254 below the bowl floor to a male coupling 255 located above the neck 252. In this example, an adapter spindle 256 has an internal bore that receives the male coupling 255 and is driven by the coupling 255. The adapter spindle has an external surface 256 that engages the main body 257 of the peeling accessory 258, for example, by engaging the internal male features 110 within the bore of the body 257. It will be appreciated that the main body may be adapted to integrate with or cooperate with a variety of appliance types, spindle types and coupling types.

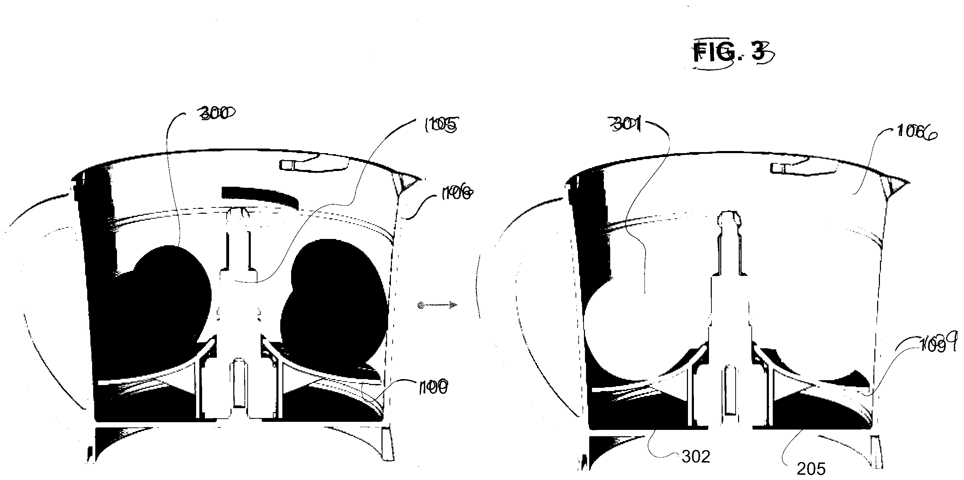

As shown in Figure 3, the accessory 100 and its spindle 105 are inserted into a food processing bowl 106. Thereafter, unpeeled potatoes 300 are located within the bowl and above the accessory 100. As the food processor's motor is operated, the rotating accessory 100 peels, chips or abrades the skin of the potato, leaving the potato or potatoes skinless 301. The potato peelings or debris are flung off of the accessory, fall below the accessory and accumulate in the space 302 below the outer rim 109 of the accessory and above the floor 205 of the bowl 106.

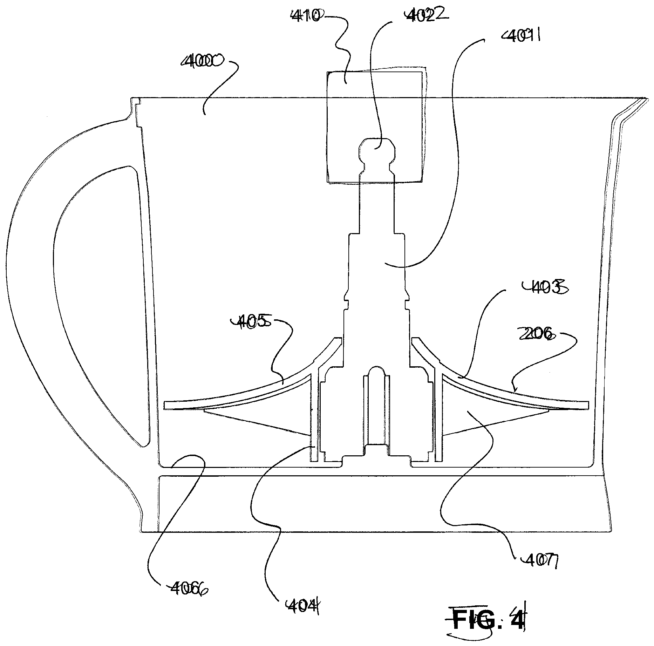

As shown in Figure 4, some styles of food processor utilise a processing bowl 400 that supports a removable spindle 401 that is driven from its upper end 402. Such devices are known from food processors of the type that utilise, for example, a hand or stick mixer that is mounted into the lid of the bowl 400. In some examples, a gear box 410 is interposed between the stick mixer and the male coupling 402 at the top of the spindle. Similar to the other examples, the accessory 403 has a generally cylindrical body 404 that supports the curved upper surface 405 above the bowl's floor 406. In this example, radially extending support ribs 407 extend between the cylindrical body 404 and the underside of the curved portion that supports the working surface of upper surface 206. Cooperating mechanical features at least temporarily interlock the accessory with the spindle.

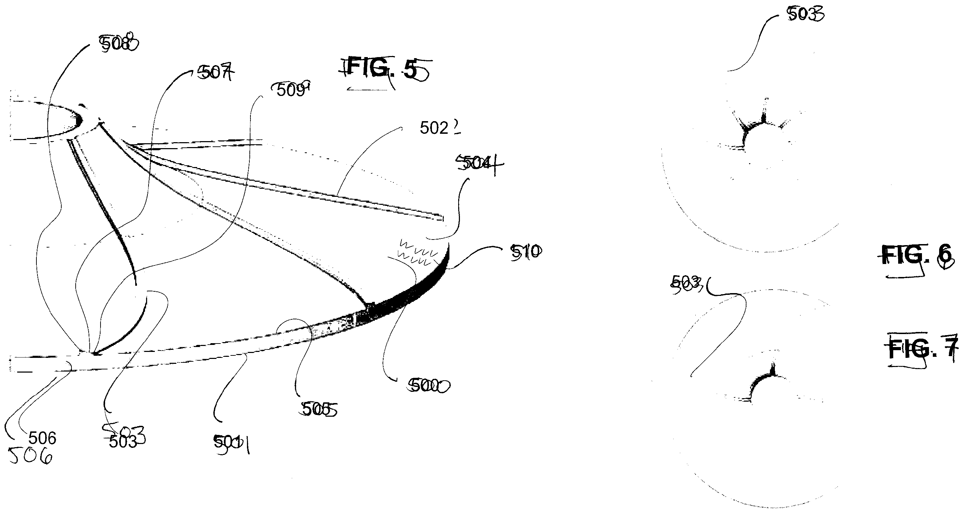

As shown in Figure 5, the upper or working surface 500 of an accessory disc 501 is formed with mechanical abrasion or peeling features 502. According to the present invention, the peeling features 502 comprise ribs, particularly ribs curved in two planes 503 that protrude above the concave or curved upper surface 504. The ribs extend from the inner to the outer rim and are curved to increase their working length. The working surface may be formed from a metal such as stainless steel 505 and applied to a polymeric substrate 506. In the alternative, the entire accessory 500 may be formed from a single material such as a food safe polymer.

As suggested by Figure 5, 6 and 7, the mechanical abrasion or peeling features may take many forms. In the example of Figures 5 and 6, the curved peeling ribs 503 have inclined, flat upper surfaces 507 and an acute leading edge 508 that is elevated above or higher than the trailing edge 509. In other embodiments, the leading and trailing edges 508, 509 may be the same height. As suggested by the example of Figure 6, the individual ribs 503 are curved when seen from above in plan view. In the example of Figure 6, the ribs are 8 in number. In the example of Figure 7, the ribs 503 are 4 in number.

In place of ribs that extend from the inner to the outer rim of the upper surface of the accessory the upper surface 500 may be provided with an abrasive surface or grating pattern 510 covering the entire or a portion of the upper surface, some such patterns and abrasive surfaces being known from other appliances including known motorised potato peelers.

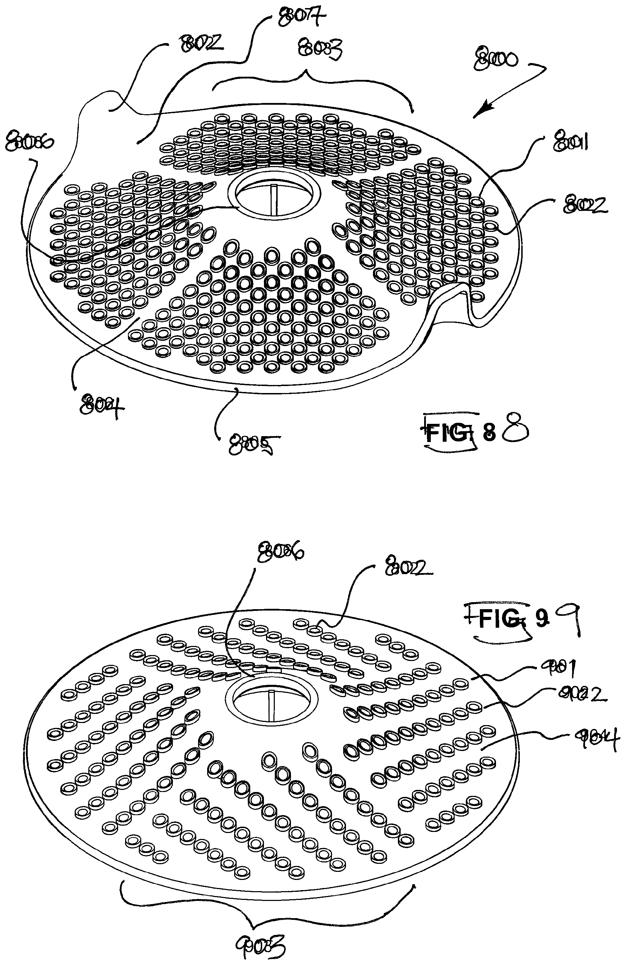

As shown in Figure 8, an alternate example of a potato peeling accessory 800 (not part of the claimed invention) includes raised circular or toroidal peeling features 801 as well as a pair of uprights 802. In the example of Figure 8, the peeling features 801 comprise individual circular or toroidal protrusions 808 with upper edges. The protrusions 8o8 are (for example) arranged in four arrays 803. The arrays are separated from one another by unfeatured or flat surfaces 804. In this example, each array 803 comprises a closely spaced protrusions 808 either arranged in rows or in a "closest packed" or staggered arrangement. Each array extends nearly to the peripheral edge 805 of the device 800. As with previous examples, the device 800 has a central opening and bore 806 for receiving a spindle or spindle adaptor. In this example, each of the pair of diametrically opposed uprights 802 comprises a truncated hyperbolic cone or similar shape that blends smoothly with the surrounding upper surface 807 of the device. The uprights 802 are located at or near the edge 805. The uprights make contact with the potatoes being peeled and promote an even tumbling action that improves the peeling efficiency of the device. A single upright may be provided so long as the accessory is balanced for rotation.

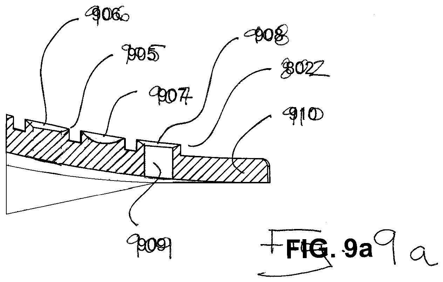

As shown in Figure 9, the toroidal protrusions 802 maybe provided in spaced apart rows 901, 902. In this example, parallel rows are arranged in four arrays 903. The parallel rows in each array 903 are perpendicular to each of the two adjacent arrays. In this example, the spacing between rows 904 is at least as wide as the diameter of the protrusions 802.

As shown in Figure 9a, the toroidal protrusions 802 may be provided in different configurations. In one configuration, the protrusion has a sharp circumferential edge 905 that surrounds a shallow depression 906. In another example, the depression is smooth and concave 907. In yet another example, the circumferential edge surrounds a chamfer 908 that leads to a through opening 909. The through opening extends completely through the disc or substraight 910 on which the protrusions 802 are formed.

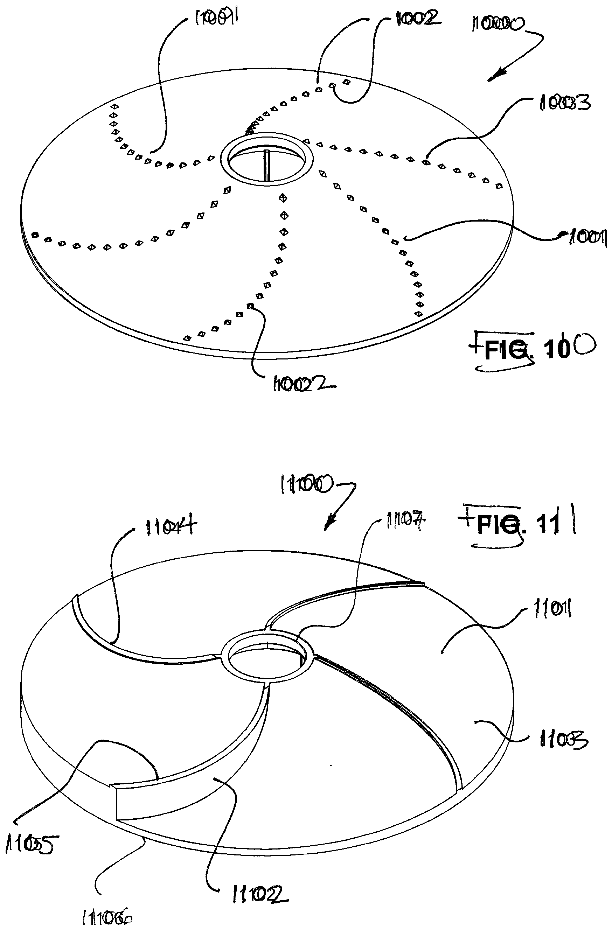

As shown in Figure 10, a potato peeling accessory 1000 (not part of the claimed invention) may have a number of arrays curved in two planes 1001, each array being composed of individual protruding abrasion features 1002. In this example, each feature 1002 is a pyramid or other prismatic shape terminating in an upper-most point 1003.

According to embodiments, as shown in Figure 11, a potato peeling accessory 1100 has a generally helical upper surface 1101 that includes a step or tapered step 1102. The step extends from the central opening (or near it) 1107 to the outer edge (or near it) 1106. In this example, the upper surface 1103 has ribs curved in two planes 1104 that provide the peeling action. In this example, one of the curved ribs 1105 defines the upper extent of the step 1102. Thus the step curves in two planes. The height of the step increases toward the outer rim 1107. The step is taller than the peeling features.

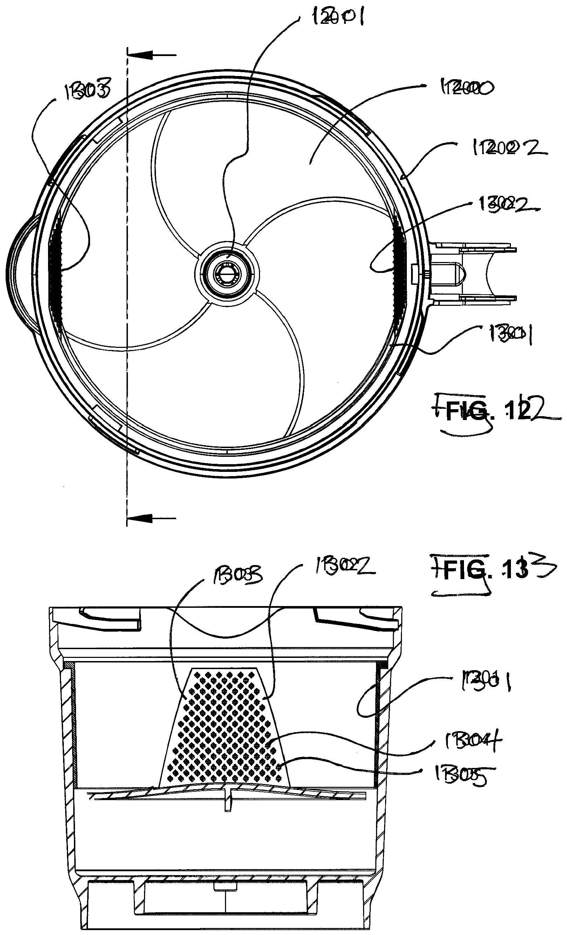

As shown in Figure 12, a potato peeling accessory disc 1200 is mounted onto a food processor's spindle 1201 and rotates within the bowl 1202 of a food processor. The rotating accessory 1200 is combined with a static ring or cylinder 1301 that carries one or more and preferably a pair of upright, static, abrasion features 1302. In this example, the internal upright abrasion features formed with the cylinder 1301 have generally flat inner surfaces 1303. Each inner surface 1303 carries an array of abrasion features 1304. In this example, the abrasion features 1304 are protruding and pyramidal, terminating in a radially inward point 1305. The ring 1301 is adapted to fit within a container such as a food processor bowl.

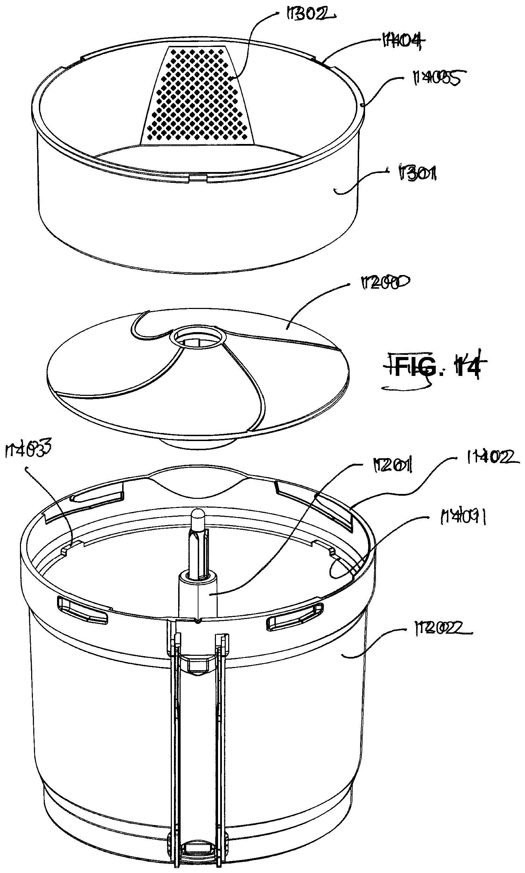

As suggested by Figures 13 and 14, the peeling accessory 1200 rotates with the spindle 1201 and the cylinder 1301 remains static, being preferably mechanically affixed to the food processor bowl 1202. In the example of Figure 14, the bowl has an internal shoulder 1401 located below the upper most rim 1402. The shoulder 1401 features, for example, upright features or tabs 1403 that interlock and cooperate with recesses 1404 located on an upper rim 1405 of the cylinder 1301. In this way, the presence of the cylinder 1301 does not interfere with the operation of the bowl's lid (not shown).

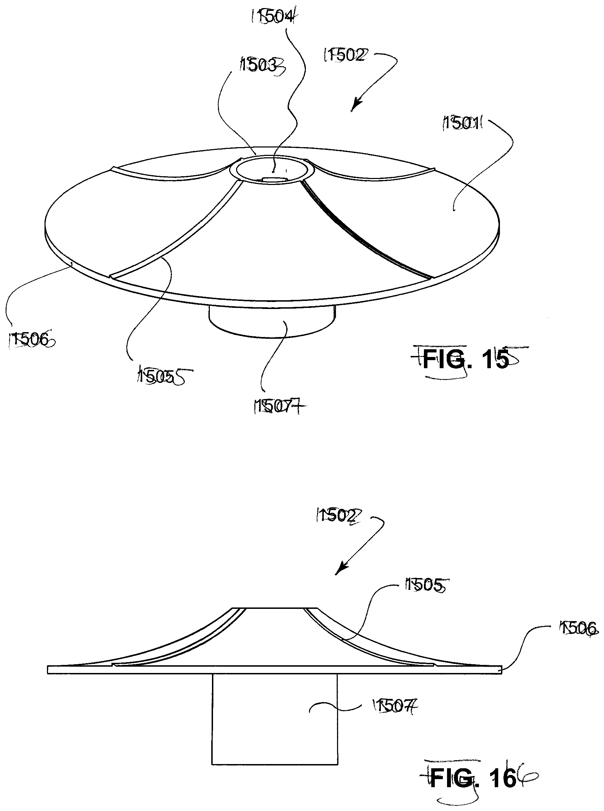

According to embodiments, as shown in Figures 15 and 16, the upper surface 1501 of the peeling accessory 1502 is radially curved having its highest point at or adjacent to the opening 1503 in which is located the coupling or coupling features 1504. In this example, the ribs 1505 are curved only in the vertical plane along the radius of the accessory. The ribs 1505 extend from the central opening 1503 (or close to it) to the peripheral rim 1506 (or close to it). In this example, it is supported by an integral sleeve 1507.

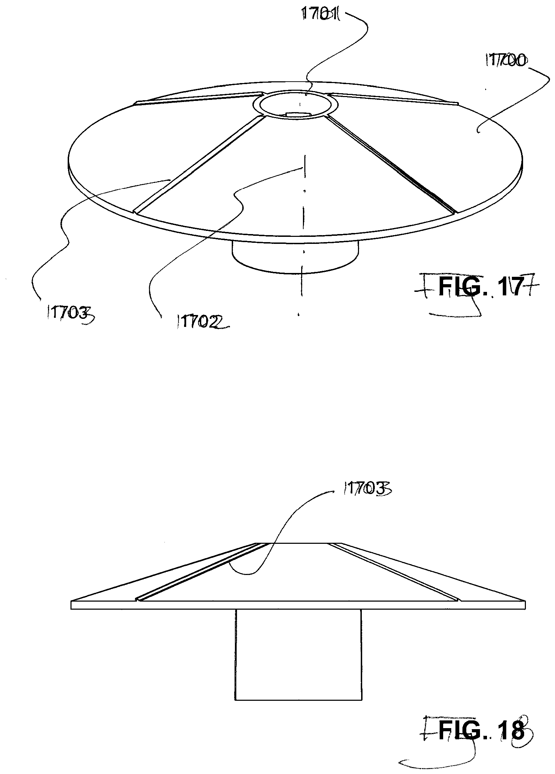

As shown in Figures 17 and 18, according to an axample not part of the claimed invention, the upper surface 1700 may form a cone or truncated cone or shape like a cone having the central opening 1701 at its centre. Accordingly, the upper surface is angled with respect to the central vertical axis of rotation 1702. The ribs 1703 in this example are straight and not curved in any plane.

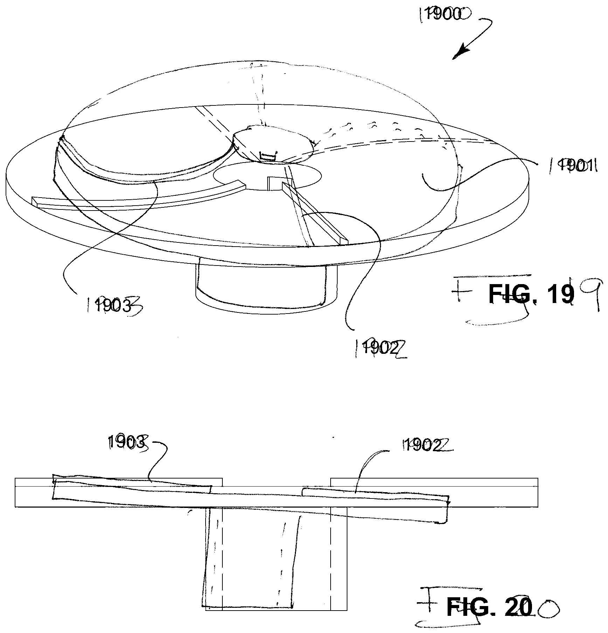

As shown in Figures 19 and 20, the accessory 1900 (not part of the claimed invenmtion) may have an entirely flat upper surface 1901 upon which may be located either straight ribs, 1902, curved ribs 1903 or other peeling or abrasion features as have been previously described.

It will be appreciated that although particularly advantageous ways of coupling the accessory to a rotating shaft have been disclosed, there are many forms and styles of driving shaft or driving coupling. When the accessory is installed in a container such as the bowl of a food processing device, it is important to have a small gap between the peripheral rim of the upper surface and the inside wall of the container. Although it is difficult to specify the precise gap, if the gap is too small, potato peelings and debris will not fall through the gap. If the gap is too large, the effective working surface of the accessory is reduced and small vegetables or potatoes may fall through into the area normally provided for peelings and debris.

## Claims

1. A potato peeling accessory device (100, 1100) comprising:
a body having a central coupling and a rim (109, 1106); and
the body having an upper surface (107, 1101),
the upper surface having peeling features being an array of ribs (1105),
**characterised in that**
the upper surface (107, 1101) is continuously concave from a highest point (108) toward the central coupling (102, 1107) to a lower point toward the rim (109, 1106); and each rib (503) in the array (1105) has an inclined, flat upper surface (507) and an acute leading edge (508).

2. The device (1100) of claim 1, wherein:
the upper surface (1103) comprises a step (1102), the step (1102) having a height that increases toward the rim (1106).

3. The device (100) of claim 1, wherein:
the upper surface (107) is supported above a cylindrical sleeve (204);
the sleeve (204) extending below the rim of the upper surface (204) to elevate the rim (206).

4. The device of (1200) claim 1, further comprising:
a static ring (1301) having at least one internal, upright abrasion feature (1302);
the ring (1301) adapted to fit within a bowl of a food processor.

5. The device (1200) of claim 4, wherein:
the ring (1301) has features that affix to a bowl of a food processor.

6. The device (1200) of claim 4, wherein the upright abrasion (1302) feature does not extend for the entire circumference of the static ring (1301).

7. The device of claim 1, wherein:
the central coupling is located in a central opening (102, 806, 1107).

8. The device of claim 7, wherein:
the central opening is a through opening (102, 806, 1107).

9. The device of claim 1, wherein:
the ribs are curved ribs (502, 1105, 1505, 1903).

10. In combination, a device in accordance with claim 1, and a food processor.

11. The device (100) of any one of claims 1, 2 or 9, wherein:
the upper surface (107) has a rim (109) and a curvature that is flatter at the rim (109).

## Patentansprüche

1. Eine Kartoffelschälzubehörvorrichtung (100, 1100), die folgende Merkmale aufweist:
einen Körper mit einer zentralen Kopplung und einem Rand (109, 1106); und
den Körper mit einer oberen Oberfläche (107, 1101), wobei die obere Oberfläche Schälmerkmale aufweist, die eine Anordnung von Rippen (1105) sind,
**dadurch gekennzeichnet, dass** die obere Oberfläche (107, 1101) von einem höchsten Punkt (108) in Richtung der zentralen Kopplung (102, 1107) zu einem niedrigeren Punkt in Richtung des Rands (109, 1106) durchgehend konkav ist; und
jede Rippe (503) in der Anordnung (1105) eine geneigte flache obere Oberfläche (507) und eine spitze vordere Rippe (508) aufweist.

2. Die Vorrichtung (1100) gemäß Anspruch 1, bei der:
die obere Oberfläche (1103) eine Stufe (1102) aufweist, wobei die Stufe (1102) eine Höhe aufweist, die in Richtung des Rands (1106) zunimmt.

3. Die Vorrichtung (100) gemäß Anspruch 1, bei der:
die obere Oberfläche (107) oberhalb einer zylindrischen Hülse (204) getragen wird;
die Hülse (204) sich unterhalb des Rands der oberen Oberfläche (204) erstreckt, um den Rand (206) zu erhöhen.

4. Die Vorrichtung (1200) gemäß Anspruch 1, die ferner folgendes Merkmal aufweist:
einen statischen Ring (1301) mit zumindest einem inneren aufrechten Abriebmerkmal (1302);
wobei der Ring (1301) dazu angepasst ist, in eine Schüssel einer Küchenmaschine zu passen.

5. Die Vorrichtung (1200) gemäß Anspruch 4, bei der:
der Ring (1301) Merkmale aufweist, die an einer Schüssel einer Küchenmaschine anhaften.

6. Die Vorrichtung (1200) gemäß Anspruch 4, bei der das aufrechte Abriebmerkmal (1302) sich nicht über den gesamten Umfang des statischen Rings (1301) erstreckt.

7. Die Vorrichtung gemäß Anspruch 1, bei der:
die zentrale Kopplung sich in einer zentralen Öffnung (102, 806, 1107) befindet.

8. Die Vorrichtung gemäß Anspruch 7, bei der:
die zentrale Öffnung eine Durchgangsöffnung (102, 806, 1107) ist.

9. Die Vorrichtung gemäß Anspruch 1, bei der:
die Rippen gekrümmte Rippen (502, 1105, 1505, 1903) sind.

10. Eine Vorrichtung gemäß Anspruch 1 und eine Küchenmaschine in Kombination.

11. Die Vorrichtung (100) gemäß einem der Ansprüche 1, 2 oder 9, bei der:
die obere Oberfläche (107) einen Rand (109) und eine Krümmung aufweist, die an dem Rand (109) flacher ist.

## Revendications

1. Dispositif accessoire pour éplucher des pommes de terre (100, 1100), comprenant:
un corps présentant un moyen de couplage central et un rebord (109, 1106); et
le corps présentant une surface supérieure (107, 1101),
la surface supérieure présentant des éléments d'épluchage qui sont un réseau de nervures (1105),
**caractérisé par le fait que**
la surface supérieure (107, 1101) est concave en continu d'un point le plus élevé (108) vers l'accouplement central (102, 1107) jusqu'à un point inférieur vers le bord (109, 1106); et
chaque nervure (503) du réseau (1105) présente une surface supérieure plane et inclinée (507) et un bord d'attaque aigu (508).

2. Dispositif (1100) selon la revendication 1, dans lequel:
la surface supérieure (1103) comprend un gradin (1102), le gradin (1102) présentant une hauteur qui augmente vers le bord (1106).

3. Dispositif (100) selon la revendication 1, dans lequel:
la surface supérieure (107) est supportée au-dessus d'un manchon cylindrique (204);
le manchon (204) s'étendant au-dessous du bord de la surface supérieure (204) pour élever le bord (206).

4. Dispositif (1200) selon la revendication 1, comprenant par ailleurs:
un anneau statique (1301) présentant au moins un élément d'abrasion vertical interne (1302);
l'anneau (1301) étant adapté pour s'adapter à l'intérieur d'un bol d'un robot culinaire.

5. Dispositif (1200) selon la revendication 4, dans lequel:
l'anneau (1301) présente des éléments qui se fixent à un bol d'un robot culinaire.

6. Dispositif (1200) selon la revendication 4, dans lequel l'élément d'abrasion vertical (1302) ne s'étend pas sur toute la circonférence de l'anneau statique (1301).

7. Dispositif selon la revendication 1, dans lequel:
le moyen de couplage central est situé dans une ouverture centrale (102, 806, 1107).

8. Dispositif selon la revendication 7, dans lequel:
l'ouverture centrale est une ouverture traversante (102, 806, 1107).

9. Dispositif selon la revendication 1, dans lequel:
les nervures sont des nervures courbes (502, 1105, 1505, 1903).

10. En combinaison, un dispositif selon la revendication 1 et un robot culinaire.

11. Dispositif (100) selon l'une quelconque des revendications 1, 2 ou 9, dans lequel:
la surface supérieure (107) présente un rebord (109) et une courbure qui est plus plane au niveau du rebord (109).
